# EUROPEAN PATENT APPLICATION

(11) **EP 1 522 341 A1**
(43) Date of publication of application: **13.04.2005**
(21) Application number: 04255748.8
(22) Date of filing: 22.09.2004
(51) Int. Cl.: B01J 35/00, B01J 35/02, B01J 37/00, B01J 37/16, B01J 23/68, B01J 23/89, B01J 23/652, B01J 23/63, B01J 23/83

(54) **Precious metal-metal oxide composite cluster**

(30) Priority: 22.09.2003 JP 2003329784
(71) Applicant: Tanaka Kikinzoku Kogyo K.K., Tokyo 103-8206 (JP)
(72) Inventor: Okubo, Kyoko, Tanaka Kikinzoku Kogyo K.K., Hiratsuka-shi Kanagawa 254-0076 (JP)
(74) Representative: Moy, David

(57) **Abstract**

The present invention provides a precious metal - metal oxide composite cluster, wherein said cluster is formed as a single particle by combining a precious metal portion comprising a single atom or an aggregate of a plurality of atoms consisting of one or more precious metals, and a metal oxide portion comprising a single molecule or an aggregate of a plurality of molecules consisting of one or more metal oxides, and wherein said particle has a particle size between 1 and 100 nm.

## Description

The present invention relates to a precious metal - metal oxide composite cluster supplied to the production of a functional material containing a precious metal as a main component like a catalyst and so on.

Precious metals, because of having superior corrosion resistance and superior high-temperature strength, are used not only as a component material of high-temperature equipment such as a glass-melting tank and a crucible, but are also used as a component material of various functional materials such as a catalyst and an electromagnetic material, because of having a unique electrical property, magnetic property and catalytic activity.

One method for applying precious metals to various functional materials, which recently captured attention, is a technique of applying an ultra-fine particle comprising precious metals. Here, the ultra-fine particle means an aggregate particle of a few precious metal atoms with a nanometric order. (Hereafter, such an ultra-fine particle is called a cluster in the present invention.)

With the use of such a cluster, various functional materials can be produced by a method of absorbing and applying clusters on the surface of an appropriate support, and then drying and heat-treating them to remove the components of a protective agent into desired functional materials. For instance, when manufacturing a catalyst, a carrier is impregnated with a solution having the clusters dispersed therein, and is baked, where the above support is generally called the carrier that is a porous material such as alumina and carbon. Then, the catalyst consisting of fine cluster particles densely dispersed on the carrier can be produced. In addition, in the field of materials for optics, electricity and magnetism, a substrate or a powder both made of a polymeric material, a metal, a glass, a ceramic or the like, is used as the support.

The present applicant has investigated a practical precious metal cluster. In Japanese Patent Laid-Open No. 11-151436, Japanese Patent Laid-Open No. 2000-279818 and Japanese Patent Laid-Open No. 2002-001095, the precious metal cluster is disclosed. (In this literature, the cluster is called a colloid, and these terms are synonymous.) These precious metal clusters comprise one or more metals, and the cluster particles are protected with a protective agent comprising a polymer such as polyvinylpyrrolidone (hereafter called PVP) and a salt such as a quaternary ammonium salt. Here, the protective agent means a compound which is chemically or physically bonded or adsorbed to the periphery of cluster particles in a metal colloid, inhibits an agglomeration of the cluster particles, and controls and stabilizes the particle size distribution into an appropriate range.

In the field of functional materials, it has been recently verified that precious metals when working with a metal oxide added as an auxiliary, show an additional function and a higher performance. Auxiliary metal oxides include, for instance, cerium oxide known as an auxiliary metal oxide (a cocatalyst) to a platinum catalyst or a platinum/rhodium catalyst known as a catalyst for cleaning exhaust gas of automobiles. Cerium oxide has the capability of occluding and discharging oxygen, and has the function of alleviating atmospheric variations of the exhaust gas.

Such a function of an auxiliary metal oxide is not developed by only a metal oxide, but is often developed by an interaction with a precious metal. A catalyst containing the above described additional cerium oxide for cleaning an exhaust gas of automobiles, does not show the capability of occluding and discharging oxygen by only the capability of cerium oxide on its own, but by an interaction with platinum (platinum/rhodium) which is a main component.

A functional material containing an auxiliary metal oxide can be produced with a method of making a support for adsorbing the clusters thereon from auxiliary metal oxides. A catalyst for cleaning an exhaust gas containing the above described cerium oxide as a cocatalyst, can employ cerium oxide for a carrier, and make the carrier absorb and carry precious metal clusters thereon into a catalyst.

Another method can be considered which makes a support adsorb precious metal clusters, and then makes the support adsorb clusters comprising metal oxides in the similar way. The cluster of metal oxides, as is generally known, can be produced by a similar method to the method of manufacturing a metal cluster. The method is disclosed, for instance, in Japanese Patent Laid-Open No. 6-218276. Accordingly, by using the metal oxide clusters together with precious metal clusters, a functional material provided with auxiliary metal oxides can be produced.

However, it has been found by the present inventors that a functional material produced according to the process described above may have some characteristics which are undesirable or insufficient. For instance, a catalyst for cleaning an exhaust gas, which contains cerium oxides in the above described example as an auxiliary metal oxide, can have low stability at a high temperature, and be deactivated by long hours of operation at a high temperature.

In addition, as described above, a functional material provided with an auxiliary metal oxide develops the function of the auxiliary metal oxide through interaction with a precious metal, so that the auxiliary metal oxide is preferably arranged in the vicinity of the precious metal.

The present invention was developed with respect to the background described above. Accordingly, an aim or object of the present invention is to provide a precious metal cluster which is suitable for manufacturing a functional material generally featuring good and/or beneficial features and preferably addressing at least some of the problems and concerns noted above, or other problems or concerns in the art, and manufacturing methods/processes thereof.

A further aim of the present invention is to provide a precious metal cluster generally featuring good and/or beneficial features and preferably addressing at least some of the problems and concerns noted above, or other problems or concerns in the art, which is preferably suitable for manufacturing a functional material and manufacturing methods/processes therefor, and comprising a precious metal as a main component and an auxiliary metal oxide.

Other aims and/or advantages of the invention will be set forth in part in the description which follows and, in part, will be apparent or obvious from the description, or may be apparent from, or learned by, practice of the invention.

According to the present invention there is provided a precious metal - metal oxide composite cluster, and a method for producing a metal - metal oxide composite cluster, as set forth in the appended claims. Preferred features of the invention will be apparent from the dependent claims, and the description which follows.

As a result of intensive investigations, the present inventors found a precious metal cluster combined with a metal oxide in a cluster particle, as a precious metal cluster capable of addressing at least some aspects of the above described problems, and preferably capable of solving at least some of the problems noted herein.

In a first aspect of the present invention there is provided a precious metal - metal oxide composite cluster forming a single particle which has a precious metal portion comprising a single atom or an aggregate of a plurality of atoms consisting of one or more precious metals, and a metal oxide portion comprising a single molecule or an aggregate of a plurality of molecules consisting of one or more metal oxides, mutually combined, and which has a particle size between 1 and 100 nm.

Preferably, the precious metal is a main component of the cluster, with the metal oxide an auxiliary.

In a second aspect of the present invention there is provided a precious metal - metal oxide composite cluster, wherein said cluster is formed as a single particle by combining a precious metal portion comprising a single atom or an aggregate of a plurality of atoms consisting of one or more precious metals, and a metal oxide portion comprising a single molecule or an aggregate of a plurality of molecules consisting of one or more metal oxides, and wherein said particle has a particle size between 1 and 100 nm.

The reason why deactivation occurs at a high temperature in the above described catalyst for cleaning an exhaust gas is considered to lie in growth of precious metal clusters due to connection between close clusters on a carrier through sintering in a high-temperature atmosphere. In a composite cluster according to the present invention, a metal oxide combined with a precious metal in a particle inhibits a sintering of precious metal particles on a carrier.

In addition, a composite cluster according to the present invention has a precious metal particle and a metal oxide particle both in a nanometric order mutually combined and can show unique properties due to the fineness of the particle. For instance, when the composite cluster is applied to a catalyst, it promises the increase of a catalytic activity due to a drastic increase of the surface area. In addition, in the present invention, a precious metal is firmly combined with a metal oxide, and the composite cluster has a large contact area between both substances. Thus, compared to the carrier of a metal oxide having a precious metal adsorbed thereto or the carrier having a precious metal and a metal oxide separately adsorbed thereto, both as described conventionally in the prior art, the composite cluster has a larger contact area between both substances, and can more effectively develop an auxiliary function of the metal oxide due to the consequent interaction between both substances.

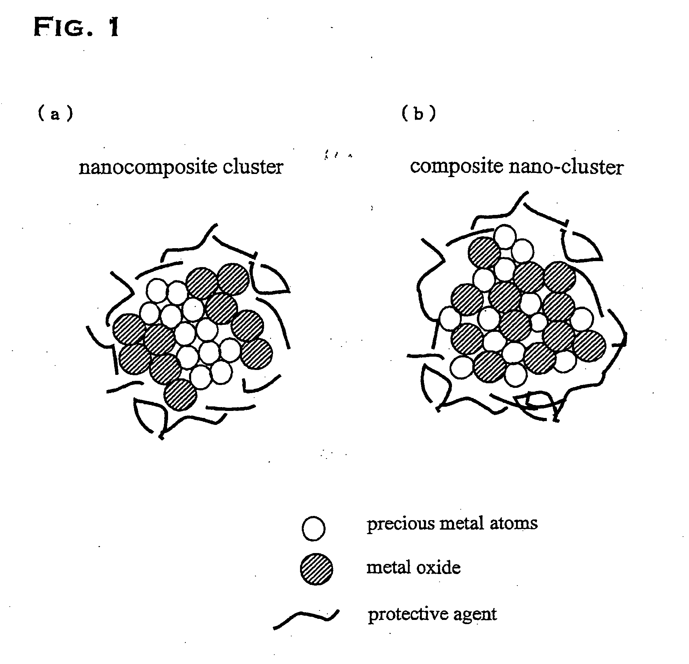

Here, as for the structural aspect of the composite of the precious metal and the metal oxide according to the present invention, one aspect may be as shown in FIG. 1(a), where a plurality of precious metal atoms and a plurality of metal oxides are aggregated to form respectively a precious metal portion and a metal oxide portion and these parts are mutually combined. (Hereafter, a composite cluster in such a state is called a nanocomposite cluster.) Another aspect may be as shown in FIG. 1(b), where precious metal atoms and metal oxide molecules are arranged and combined at random. (Hereafter, a composite cluster in such a state is called a composite nano-cluster.)

Preferably, a composite cluster according to the present invention may be constituted by a precious metal and a metal oxide, wherein the precious metal is any element selected from the group consisting of Pt, Au, Ag, Ru, Pd, Ir, Rh and Os, and the metal oxide is not particularly limited but preferably is an oxide of any metal selected from the group consisting of Be, Mg, Ca, Sr, Ba, Ra, Se, Y, Ti, Zr, Hf, V, Nb, Ta, Cr, Mo, W, Mn, Te, Re, Fe, Co, Ni, Cu, La, Ce, Pr, Nd, Pm, Sm, Gd, Tb, Dy, Ho, Er, Tm, Yb, Lu, Zn, Cd, Hg, B, Al, Ga, In, Tl, Si, Ge, Sn, Pb, P, As, Sb, Bi, Se, Te and Po, can be applied. In addition, a cluster particle may comprise not only one sort of a precious metal or metal oxide, but also may comprise a plurality of precious metals or metal oxides.

More preferably, the precious metal is selected from the group consisting of Pt and Au.

More preferably, the metal oxide is an oxide of any metal selected from the group consisting of Ce, Ni, Zr, Fe, Mo, W, and La.

Preferably, the particle has a particle size between 1 and 50 nm, more preferably between 1 and 25 nm, even more preferably between 1 and 10 nm, notably a particle size of 2 to 5 nm.

A composite cluster according to the present invention is preferably provided with a protective agent on the surface. The effect of the protective agent was described above, i.e. by the addition of the protective agent, the cluster particles with small grain sizes can keep a suspended state while maintaining the grain sizes. In addition, when a catalyst is produced, the agent makes the grain size of a catalyst component small and increases the effective surface area of the catalyst. Suitable protective agents include a polyvinylpyrrolidone, a polyvinylpolypyrrolidone, 1-acetyl-2-pyrrolidone, 1-n-butyl-2-pyrrolidone, N-tosyl pyrrolidone, 1-methyl-2-pyrrolidone, a N-vinylpyrrolidone/styrene, a polyacrylonitrile, a polyvinyl alcohol, a polyacrylic acid, a polyallylamine hydrochloride, citric acid, dodecanthiol, fluoro thiol, alkylthiol, mercaptopropionic acid, mercaptosuccinic acid, mercaptopropionylglycine, glutathione, trimethylammonium bromide, ethanolamine, N-(3-aminopropyl)diethanolamine, cyclodextrin, aminopectin, methyl cellulose, an alkylcarboxylic acid and alkylamine having 6 - 18 carbon atoms, i.e. with a carbon number of 6-18, N,N-dimethyl-N-laurylamine oxide, an alkylamine oxide having 6 - 20 carbon atoms, i.e. with a carbon number of 6-20, n-tetradecyl sodium sulfate, sodium dodecyl sulfate, sodium decyl sulfate, sodium n-nonyl sulfate, sodium n-octyl sulphate, a sodium alkyl sulfate, a sodium polyoxyethylene alkylether sulfate, a polyoxyethylene alkylphenylether phosphate, triethanolamine lauryl sulfate, sodium lauroyl sarcosinate, sodium lauroylmethyltaurinate, alkyltrimethylammonium chloride, dialkyldimethylammonium chloride, stearyldimethylbenzylammonium chloride, stearyltrimethylammonium chloride, benzalkonium chloride, benzethonium chloride, polyoxyethylene sorbitan monooleate, ethyleneglycol monostearate, propyleneglycol monostearate, a polyoxyethylene glycerol monostearate and a polyoxyethylene sorbitan monostearate. Preferably, the protective agent is a polyvinylpyrrolidone (PVP).

In a third aspect of the present invention there is provided a first method or process for producing a composite cluster by mixing a solution having precious metal clusters dispersed therein, with a solution having metal oxide clusters dispersed therein. Suitably, the method or process for producing a precious metal - metal oxide composite cluster is such that said composite cluster is formed by mixing a solution having precious metal clusters comprising atoms derived from one or more precious metals dispersed therein with a solution having metal oxide clusters comprising molecules derived from one or more metal oxides dispersed therein. As such, the method comprises mixing a solution having precious metal clusters dispersed therein with a solution having metal oxide clusters dispersed therein. This method is suitable for producing a composite cluster having the form of a nanocomposite cluster. A second production method is a method of, first, preparing a solution having dispersed metal oxide clusters therein, and dissolving a precious metal salt into the solution to reduce precious metal ions in the solution and simultaneously combine the reduced substance with the metal oxide clusters.

Thus, in a fourth aspect of the present invention there is provided a method or process for producing a precious metal - metal oxide composite cluster comprising the steps of: preparing a solution having metal oxide clusters comprising molecules derived from one or more metal oxides dispersed therein, and dissolving one or more precious metal salts into the solution to reduce the precious metal ions in the solution and simultaneously combine forming precious metal with the metal oxide clusters.

In the method of the third aspect, clusters of a precious metal and a metal oxide are each separately prepared. A method for preparing precious metal clusters comprises dissolving the salt of a metal constituting cluster particles into a solvent to ionize the salt, and adding a protective agent and a reducing agent to the solution, to reduce metal ions into cluster particles and simultaneously protect the formed cluster particles with the protective agent. The protective agent may be dissolved simultaneously with the metal salt. In order to disperse the cluster particles comprising a plurality of metals, a plurality of metal salts are dissolved in a solvent.

Features described herein of the first, second, third and fourth and any further aspects of the present invention, respectively, may be regarded as preferred features of the other aspects of the present invention.

Herein, references to "a single molecule" or "an aggregate of a plurality of molecules" when referring to the metal oxide portion may be interchangeable with "a single formula unit" or "an aggregate of a plurality of formula units", respectively.

The following metal salts are suitable as raw materials. Suitable metal salts for preparing a platinum colloid include hexachloroplatinic acid, dinitrodiammineplatinum, dinitrodiammineplatinum nitrate, platinous chloride, platinic chloride, chloroplatinic acid and a chloroplatinate. Suitable metal salts for preparing a palladium colloid include palladium chloride, palladium nitrate and dinitrodiamine palladium. Suitable metal salts for preparing a gold colloid include chloroauric acid, a chloroaurate, potassium auric cyanide and potassium gold cyanide. Suitable metal salts for preparing a silver colloid include silver chlorate, silver nitrate, silver acetate and silver lactate. Suitable metal salts for preparing a ruthenium colloid include ruthenium chloride and ruthenium nitrate. Suitable metal salts for preparing a rhodium colloid include rhodium chloride, rhodium nitrate and rhodium acetate. Suitable metal salts for preparing an iridium colloid include hexachloroiridate and iridium trichloride. Suitable metal salts for preparing an osmium colloid include osmium oxide.

In addition, as for a protective agent, the above described protective agents are applicable. Furthermore, as for a solvent, water or a mixed solvent of water and an organic solvent is suitable. Suitable organic solvents include alcohols such as ethanol, ketones such as acetone, and esters such as ethyl acetate.

The reduction of precious metal ions in a solvent is preferably conducted by adding a reducing agent. The reducing agent is not limited in particular so far as is applicable to a chemical reduction process, but has only to be able to reduce a mixed solution of a metal salt and a protective agent. Preferable reducing agents include alcohols such as ethanol, formic acid, hydrogen, hydrazine, amine, sodium borohydride and dimethylamine borane.

On the other hand, a metal oxide cluster can be prepared by dissolving the salt of metals constituting metal oxides and a protective agent into a solvent, and then reducing and oxidizing the metal ions. Suitable metal salts to be dissolved include a nitrate, an acetate, a perchlorate, an alkoxide, a halide and an acetylacetonate.

For a protective agent used in the preparation of the metal oxide cluster, the protective agent similar to that used in the preparation of a precious metal cluster is preferably applied, suitably for example, identical protective agents. That is because when a different protective agent is applied, there is a fear of causing a reaction between the protective agents. In addition, as for methods of reducing metal ions and oxidizing the reduced substance, a method of applying an ultrasonic wave to a solution including metal ions is preferable. In the step, the metal ion in the solution is temporarily changed to a metal hydroxide and then changed to a metal oxide cluster. By mixing solutions of a precious metal cluster and a metal oxide cluster prepared in the above described steps, a composite cluster solution can be produced in which precious metals and metal oxides are combined.

A second production method is a process of dissolving a precious metal salt and a protective agent in a solution of a metal oxide cluster, reducing the precious metal ion and simultaneously combining the reduced substance with the metal oxide. In the process, the metal oxide cluster solution can be prepared by a method similar to the above described method.

In the process, suitable precious metal salts, metal salts and a protective agent to be added into a metal oxide cluster solution are similar to the precious metal salt and so on applied in the above described first method. In addition, as for reduction of precious metal salts, the method of adding a reducing agent is preferably similar to the first method.

For a better understanding of the invention reference will now be made, by way of example, to the accompanying drawings in which:
FIG. 1 is a schematic view showing the form of composite cluster, which can be produced in the present invention.
FIG 1(a) shows a nanocomposite cluster as described herein, and FIG 1(b) shows a composite nano-cluster as described herein.

Preferred embodiments according to the present invention will be now described below. These are to be viewed as being illustrative of specific materials falling within the broader disclosure presented herein.
First Embodiment: Dinitrodiammineplatinum in the amount of 0.1 g, PVP in the amount of 0.25 g and ethanol in the amount of 25 mL were mixed into 100 mL of water, and the solution was refluxed at 86°C for 10 hours to prepare a platinum cluster. Aside from it, 0.3 g of cerium nitrate hexahydrate and 0.08 g of PVP were mixed into 50 mL of pure water, and the mixed solution was stirred, and irradiated with an ultrasonic wave having the frequency of 200 kHz at the output of 6 W/cm² for five hours, to prepare a cerium oxide cluster. Then, the prepared platinum cluster and cerium oxide cluster were mixed. By the above described operations, a platinum/cerium oxide composite cluster (a nanocomposite cluster in FIG. 1(a)) was prepared.
Second Embodiment: Dinitrodiammineplatinum in the amount of 0.1 g, PVP in the amount of 0.25 g and ethanol in the amount of 25 mL were mixed into 100 mL of water, and the solution was refluxed at 86°C for 10 hours to prepare a platinum cluster. Cerium nitrate hexahydrate in the amount of 0.3 g, PVP in the amount of 1.0 g and urea in the amount of 0.05 g were mixed into 120 mL of a methanol-ethanol mixture solvent (with a mixture ratio of 5:7), and the mixed solution was stirred, and refluxed at 70°C for seven hours to prepare a cerium oxide cluster. Then, the prepared platinum cluster and cerium oxide cluster were mixed. By the above described operations, a platinum/cerium oxide composite cluster (a nanocomposite cluster in FIG. 1(a)) was prepared.
Third Embodiment: Cerium nitrate hexahydrate in the amount of 0.3 g and PVP in the amount of 0.08 g were mixed into 50 mL of pure water, and the mixed solution was stirred, and irradiated with an ultrasonic wave having the frequency of 200 kHz and the output of 6 W/cm² for five hours, to prepare a cerium oxide cluster. Into 30 mL of the cerium oxide cluster solution, 0.1 g of dinitrodiammineplatinum, 0.25 g of PVP and 25 mL of ethanol were mixed, and the solution was refluxed at 86°C for five hours so that platinum ions can be reduced. By the above described operations, a platinum/cerium oxide composite cluster (a composite nano-cluster in FIG. 1(b)) was prepared.
Fourth Embodiment: Dinitrodiammineplatinum in the amount of 0.1 g, PVP in the amount of 0.25 g and ethanol in the amount of 25 mL were mixed into 100 mL of water, and the solution was refluxed at 86°C for 10 hours to prepare a platinum cluster. Ferric nitrate hexahydrate in the amount of 0.4 g and PVP in the amount of 0.08 g were mixed into 50 mL of pure water, and the mixed solution was stirred, and irradiated with an ultrasonic wave having the frequency of 200 kHz at the output of 6 W/cm² for five hours, to prepare a cerium oxide cluster. Then, the prepared platinum cluster and cerium oxide cluster were mixed. By the above described operations, a platinum/iron oxide composite cluster (a nanocomposite cluster) was prepared.
Fifth Embodiment: Nickel nitrate in the amount of 0.3 g and PVP in the amount of 0.08 g were mixed into 50 mL of pure water, and the mixed solution was stirred, and irradiated with an ultrasonic wave having the frequency of 200 kHz at the output of 6 W/cm² for five hours, to prepare a nickel oxide cluster. Into 30 mL of the nickel oxide cluster solution, 0.2 g of aurichloric acid, 0.25 g of PVP and 70 mL of ethanol were mixed, and the solution was refluxed at 86°C for five hours so that the gold ions were reduced. By the above described operations, a gold/nickel oxide composite cluster (a composite nano-cluster) was prepared.
Sixth Embodiment: Dinitrodiammineplatinum in the amount of 0.1 g, PVP in the amount of 0.25 g and ethanol in the amount of 25 mL were mixed into 100 mL of water, and the solution was refluxed at 86°C for 10 hours to prepare a platinum cluster. Zirconium oxide nitrate in the amount of 0.2 g, PVP in the amount of 1.0 g and urea in the amount of 0.05 g were mixed into 120 mL of a methanol-ethanol mixed solvent, and the mixed solution was stirred, and refluxed for seven hours to prepare a zirconium oxide cluster. Then, the prepared platinum cluster and zirconium oxide cluster were mixed. By the above described operations, a platinum/zirconium oxide composite cluster (a nanocomposite cluster) was prepared.
Seventh Embodiment: Molybdenum hexaammonium in the amount of 0.4g and PVP in the amount of 0.08 g are mixed into 50 mL of pure water, and the mixed solution was stirred, and irradiated with an ultrasonic wave having the frequency of 200 kHz at the output of 6 W/cm² for five hours, to prepare a molybdenum oxide cluster. Into 30 mL of the molybdenum oxide cluster solution, 0.2 g of aurichrolic acid, 0.25 g of PVP and 70 mL of ethanol were mixed, and the solution was refluxed at 86°C for five hours, so that gold ions were reduced. By the above described operations, a gold/molybdenum oxide composite cluster (a composite nano-cluster) was prepared.
Eighth Embodiment: Chloroauric acid in the amount of 0.1 g, PVP in the amount of 0.25 g and ethanol in the amount of 25 mL were mixed into 100 mL of water, and the solution were refluxed at 86°C for 10 hours to prepare a gold cluster. Sodium tungstate in the amount of 0.3 g, PVP in the amount of 1.0 g and urea in the amount of 0.05 g were mixed into 120 mL of a methanol-ethanol mixed solvent, and the mixed solution was stirred, and refluxed for seven hours to prepare a tungsten oxide cluster. Then, the prepared gold cluster and tungsten oxide cluster were mixed. By the above described operations, a gold/tungsten oxide composite cluster (a nanocomposite cluster) was prepared.
Ninth Embodiment: Sodium tungstate in the amount of 0.3g and PVP in the amount of 0.08 g were mixed into 50 mL of pure water, and the mixed solution was stirred, and irradiated with an ultrasonic wave having the frequency of 200 kHz at the output of 6 W/cm² for five hours, to prepare a tungsten oxide cluster. Into 30 mL of the tungsten oxide cluster solution, 0.1 g of dinitrodiammineplatinum, 0.25 g of PVP and 70 mL of ethanol were mixed, and the solution was refluxed at 86°C for five hours, so that gold ions were reduced. By the above described operations, a platinum/tungsten oxide composite cluster (a composite nano-cluster) was prepared.
Tenth Embodiment: Lanthanum acetate in the amount of 0.4 g and PVP in the amount of 0.08 g were mixed into 50 mL of pure water, and the mixed solution was stirred, and irradiated with an ultrasonic wave having the frequency of 200 kHz at the output of 6 W/cm² for five hours, to prepare a lanthanum oxide cluster. Into 30 mL of the lanthanum oxide cluster solution, 0.2 g of chloroauric acid, 0.25 g of PVP and 70 mL of ethanol were mixed, and the solution was refluxed at 86°C for five hours, so that gold ions were reduced. By the above described operations, a gold/lanthanum oxide composite cluster (a composite nano-cluster) was prepared.
Examination of catalytic performance: The platinum/cerium oxide composite cluster which was prepared in the first embodiment was absorbed and carried by a gamma-alumina carrier so that platinum occupies 1 wt%, and cerium oxide 20 wt% (both by ratio to the weight of the carrier), and the carrier was baked at 800°C for 50 hours to prepare an alumina catalyst carrying platinum-cerium oxide. In a similar way, a platinum/zirconium oxide composite cluster which was prepared in the sixth embodiment was absorbed and carried by the gamma-alumina carrier, and the carrier was baked to prepare an almina catalyst carrying platinum-zirconium oxide. Particle sizes of platinum, cerium oxide and zirconium oxide of these catalysts were 2 to 5 nm as a result of TEM observation.

The performance of these catalysts was examined on propylene gas employed as a treatment object. As for an evaluation method, 0.4g of a catalyst was weighed and filled in a reaction vessel, propylene gas was passed through the vessel under a condition of SV: 2000h⁻¹, and the oxidation activity of the catalysts was evaluated by measuring a catalytic purging temperature T₅₀.

As a result, the catalyst prepared from a composite cluster in the first and the sixth embodiments showed T₅₀s of respectively 134°C and 132°C, whereas a cerium oxide catalyst carrying platinum was examined in a similar way and showed T₅₀ of 160°C.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A precious metal - metal oxide composite cluster forming a single particle which comprises a precious metal portion comprising a single atom or an aggregate of a plurality of atoms consisting of one or more precious metals, and a metal oxide portion comprising a single molecule or an aggregate of a plurality of molecules consisting of one or more metal oxides, mutually combined, and which has a particle size between 1 and 100nm.

2. A precious metal - metal oxide composite cluster, wherein said cluster is formed as a single particle by combining a precious metal portion comprising a single atom or an aggregate of a plurality of atoms consisting of one or more precious metals, and a metal oxide portion comprising a single molecule or an aggregate of a plurality of molecules consisting of one or more metal oxides, and wherein said particle has a particle size between 1 and 100 nm.

3. A precious metal - metal oxide composite cluster according to any preceding claim wherein the precious metal is any element selected from the group consisting of Pt, Au, Ag, Ru, Pd, Ir, Rh and Os, and the metal oxide is an oxide of any metal selected from the group consisting of Be, Mg, Ca, Sr, Ba, Ra, Se, Y, Ti, Zr, Hf, V, Nb, Ta, Cr, Mo, W, Mn, Te, Re, Fe, Co, Ni, Cu, La, Ce, Pr, Nd, Pm, Sm, Gd, Tb, Dy, Ho, Er, Tm, Yb, Lu, Zn, Cd, Hg, B, Al, Ga, In, Tl, Si, Ge, Sn, Pb, P, As, Sb, Bi, Se, Te and Po.

4. A precious metal - metal oxide composite cluster according to any preceding claim wherein the particle is provided with a protective agent on the surface thereof.

5. A precious metal - metal oxide composite cluster according to claim 4, wherein the protective agent is selected from polyvinylpyrrolidone, polyvinylpolypyrrolidone, 1-acetyl-2-pyrrolidone, 1-n-butyl-2-pyrrolidone, N-tosyl pyrrolidone, 1-methyl-2-pyrrolidone, a N-vinylpyrrolidone/styrene polymer, polyacrylonitrile, polyvinyl alcohol, polyacrylic acid, polyacrylic amine hydrochloride, citric acid, dodecanthiol, a fluoro thiol, an alkylthiol, mercaptopropionic acid, mercaptosuccinic acid, mercaptopropionylglycine, glutathione, trimethylammonium bromide, ethanolamine, N-(3-aminopropyl)diethanolamine, cyclodextrin, aminopectin, methyl cellulose, an alkylcarboxylic acid or an alkylamine having 6-18 carbon atoms, N,N-dimethyl-N-laurylamine oxide, an alkylamine oxide having 6-20 carbon atoms, n-tetradecyl sodium sulfate, sodium dodecyl sulfate, sodium decyl sulfate, sodium n-nonyl sulfate, sodium n-octyl sulphate, a sodium alkyl sulfate, a sodium polyoxyethylene alkylether sulfate, a polyoxyethylene alkylphenylether phosphate, triethanolamine lauryl sulfate, sodium lauroylsarcosinate, sodium lauroylmethyltaurinate, an alkyltrimethylammonium chloride, a dialkyldimethylammonium chloride, stearyldimethylbenzylammonium chloride, stearyltrimethylammonium chloride, benzalkonium chloride, benzethonium chloride, a polyoxyethylene sorbitan monooleate, ethyleneglycol monostearate, propyleneglycol monostearate, a polyoxyethylene glycerol monostearate and a polyoxyethylene sorbitan monostearate.

6. A method for producing a precious metal - metal oxide composite cluster, wherein said composite cluster is formed by mixing a solution having precious metal clusters comprising atoms derived from one or more precious metals dispersed therein, with a solution having metal oxide clusters comprising molecules derived from one or more metal oxides dispersed therein.

7. A method for producing a precious metal - metal oxide composite cluster according to claim 6, wherein the precious metal cluster is prepared by a process of dissolving a corresponding precious metal salt into a solvent and reducing the precious metal ions in the solvent, and the metal oxide cluster is prepared by a process of dissolving a corresponding metal salt into a solvent, reducing the metal ions in the solvent, and then oxidizing the reduced substance.

8. A method for producing a precious metal - metal oxide composite cluster comprising the steps of: preparing a solution having metal oxide clusters comprising molecules derived from one or more metal oxides dispersed therein, and dissolving one or more precious metal salts into the solution to reduce the precious metal ions in the solution and simultaneously combining to form precious metal with the metal oxide clusters.

9. A method for producing a precious metal - metal oxide composite cluster according to claim 8, wherein the metal oxide cluster is prepared by a process of dissolving a corresponding metal salt into a solvent, reducing the metal ions in the solvent, and then oxidizing the reduced substance.

10. A method for producing a precious metal - metal oxide composite cluster according to claims 7 or 9, wherein the precious metal ion in the solvent is reduced by a reducing agent.

11. A method for producing a precious metal - metal oxide composite cluster according to claims 7 or 9, wherein reduction of the metal ion in the solvent and oxidation of the reduced substance is conducted while an ultrasonic wave is applied to the solution.

12. Use of a composite cluster according to any of claims 1 to 5 in a catalyst.

13. A precious metal - metal oxide composite cluster according to any of claims 1 to 5 obtainable by the method according to any of claims 6 to 11.

14. A precious metal - metal oxide composite cluster, use or method for manufacture thereof substantially as hereinbefore described with reference to the examples and figures.
